# EUROPEAN PATENT SPECIFICATION

(11) **EP 0 523 614 B1**
(45) Date of publication and mention of the grant of the patent: **04.09.1996**
(21) Application number: 92111954.1
(22) Date of filing: 14.07.1992
(51) Int. Cl.: F16C 33/78

(54) **A seal assembly, particularly for a rolling element bearing**
Dichtungsanordnung, insbesondere für Wälzlager
Dispositif de joint, en particulier pour palier à contact de roulement

(30) Priority: 16.07.1991 IT TO910173 U
(43) Date of publication of application: 20.01.1993
(73) Proprietor: SKF INDUSTRIE S.P.A., I-10123 Torino (IT)
(72) Inventor: Vignotto, Angelo, I-10134 Torino (IT)
(74) Representative: Plebani, Rinaldo

(56) References cited:
- EP-A- 0 248 572
- EP-A- 0 464 379
- DE-A- 3 519 598
- US-A- 4 669 895

## Description

The present invention relates to a seal assembly, particularly for a rolling element bearing.
In particular, the present invention relates to a seal assembly suitable to be fitted between the rings of a rolling element bearing to protect the rolling elements of the bearing, in applications where the bearing is subject to relatively high speeds and, in particular, operates in conditions made difficult by the continual presence of external contaminants. A typical application is in the car industry, notably in wheel assemblies where the bearings are located between a wheel hub and a strut of the wheel assembly, and are therefore particularly exposed to external contaminants as they operate close to the road surface.

Under such operating conditions, sealed rolling element bearings are normally used, that is bearings fitted with one or more sealing screens to prevent external contaminants, such as water, mud and dust, coming into direct contact with the rolling elements of the bearing.

In most applications, as e.g. in DE-A-3519598, such screens are fitted with radially extending sealing lips securely fixed to one of the rings and slidably cooperating with a surface of the other ring, thereby generally ensuring a radial seal.

Such screens, though universally used, suffer from the disadvantage of having a poor long-term reliability; the radial seal formed by the lips in fact tends to become less effective after a relatively short time, in any case shorter than the life of the bearing.

This disadvantage becomes of greater significance in wheel assemblies where high quantities of external contaminants are concentrated close to the outer rotatable member as this is the closest to the road surface. Consequently, sliding lips operating in such areas are subject to continual wear due to abrasion by the contaminants which, at first, settle close to where the lip slides against the outer ring and, later, move towards the rolling elements of the bearing itself by working themselves between the lip and its associated sliding surface, causing the lip to wear in a short time, so that the said lip is no longer able effectively to protect the rolling elements. Double screen assemblies in accordance with the preamble of claim 1, such as that shown in EP-A-0248572, do not solve this problem.

The object of the present invention is to provide a seal assembly capable of overcoming the above-described disadvantages and, in particular, one having characteristics such as to be able to operate highly reliably in the presence of high concentrations of external contaminants, and which is at the same time both simple and economical to manufacture.

According to the present invention, there is provided a seal assembly, as described in claim 1.

The invention will now be described referring to the attached drawings, which illustrate a non-limitative embodiment, in which:
Figure 1 shows in radial half-section, a preferred embodiment of a seal assembly made according to the present invention fitted between two relatively movable members, in particular between two rings of a rolling element bearing; and
Figure 2 shows the seal assembly of Figure 1 in enlarged scale radial half-section.

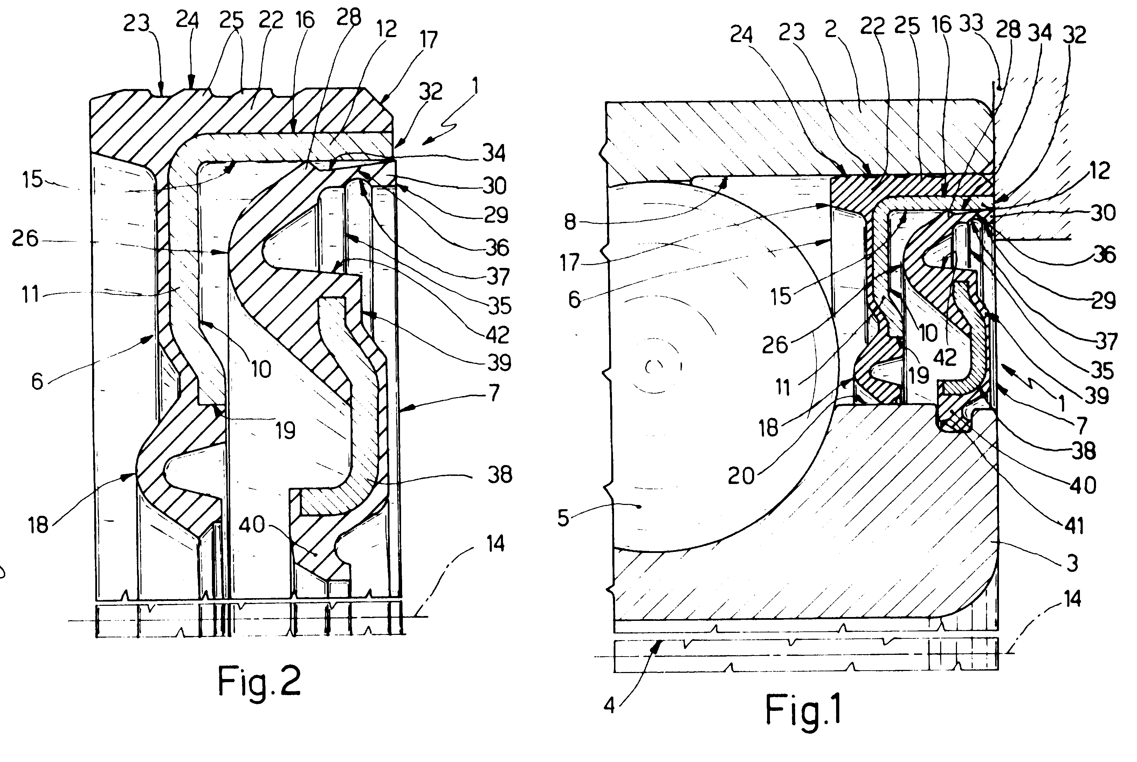

In Figure 1, 1 indicates a seal assembly which can be fitted between two relatively movable members 2, 3, in this case the rings of a bearing 4 comprising a ring of rolling elements 5, in this case balls.

With reference to Figure 1, and in particular also to Figure 2, the seal assembly 1 comprises first and second screens 6, 7, adjacent one another and closing an annular cavity 8 defined by the said members 2, 3 and housing the said rolling elements 5. In particular, the second screen 7 is located towards the outside of the cavity 8 and the first screen 6 is placed between this latter and the rolling elements 5.

Referring to Figure 2, the first screen 6 includes a rigid reinforcement 10 with a radial flange portion positioned facing the second screen 7 and a sleeve portion 12 adapted to extend axially in use, into a position adjacent to the first member 2 (Figure 1). The sleeve portion 12 extends axially parallel to an axis of rotation 14 of the members 2, 3 (Figures 1 and 2) and on the side facing the second screen 7 is delimited by a sliding surface 15, the function of which will be explained in detail below, and on the side facing the first member 2 by a lateral cylindrical surface 16.

Still referring to Figure 2, the first screen 6 comprises, in addition, an elastomeric element 17 including a lip 18 projecting from a rim 19 of the flange portion 11 opposite the sleeve portion 12 of the rigid reinforcement 10 towards the second member 3. This lip 18 is seen in radial half-section to be V-shape with its concavity facing the said second screen 7 and an axis substantially parallel to the axis 14, and in use the lip 18 can slidably interact with a flat surface 20 (Figure 1) delimiting the second member 3 on the side facing the rigid reinforcement 10 of the first screen 6.

The elastomeric element 17 further includes an annular portion 22 covering the surface 16 of the sleeve portion 12 and is adapted to fit, in use, between the said sleeve portion 12 and the first member 2. This annular portion 22 has a number of circumferential grooves 23 formed in a surface 24 adapted to interact in use, with the first element 2 to define a number of ribs 25 allowing an interference fit of the first screen 6 on the first member 2.

Still referring to Figure 1 and Figure 2, the second screen 7, seen in radial half-section, is S-shape and includes an annular lip 26 substantially cooperating as a fluid-tight seal with the sliding surface 15 of the sleeve portion 12 of the first screen 6.

This annular lip 26 is V-shape in radial half-section with its concavity facing outwardly of the cavity 8 and its axis substantially parallel to the axis 14 to define, with the rest of the screen 7, a cavity 42 facing away from the screen 6 and extending towards the sleeve portion 12; the lip 26 includes a radial projection 28 slidably cooperating with the sliding surface 15, and an annular end portion 29 extending substantially axially away from the screen 6, that is towards the outside of the cavity 8.

This annular end portion 29 has an axial end portion 30 projecting outwardly of an edge 32 of the said sleeve portion 12; during use this rim can lie flush with the outer edge of the members 2, 3 so that, during use, in undeformed condition, the section 30 projects out of the cavity 8 and is thus able to interact axially with a shoulder 33 (Figure 1) for the member 2 outside the cavity 8. The end portion 29 is, finally, radially tapered towards the projection 28 and is delimited on the side facing the sliding surface 15 by a conical surface 34 tapering pointing towards the radial projection 28.

According to the invention, between the radial projection 28 and the end portion 29 of the annular lip 26, there is, on the said annular lip 26, a radial undercut forming a virtual hinge 36 permitting elastic deformation of the end portion 29 without causing corresponding deformation of the annular lip 26 at the radial projection 28. The said undercut is defined by a radial groove 37 formed in the annular lip 26 on the opposite side from the conical surface 34.

Still referring to Figure 2, the second screen 7 also comprises a rigid reinforcement 38, which in radial half-section is substantially L-shape facing the lip 18 of the first screen 6, and an elastomeric element 39. This element includes the annular lip 26, supported by the rigid reinforcement 38 and a further radial lip 40 facing the said annular lip 26, shaped so as to snap engage, during use, into a circumferential groove 41 on the member 3.

From the above description it will be apparent that the seal assembly 1, as described, is highly reliable as its characteristic construction gives an axial seal in addition to the traditional radial seal, in the case described against a shoulder which would be present in any case to axially stop the members 2 and 3. In fact, when mounting the rotatable members 2, 3 on the associated supports (not illustrated), the end portion 29 of the lip 26, which as described above projects out of the cavity 8, will axially interact to interfere with the shoulder 33, which in this particular case can be an ordinary resilient ring, as soon as the ring or member 2 strikes the shoulder 33. The resulting elastic deformation of the end portion 29 creates an axial seal between the section 30 and the shoulder 33 just at the edge 32, as well as an additional radial seal between the section 29 and the surface 15. This double radial and axial seal at the edge 32 determines a "pre-seal" which protects the sliding projection 28 from contact with any external contaminants. At the same time, the undercut 35, which acts as a bellows, prevents the said deformation of the section 30 being transmitted to the projection 28, which is therefore able to carry out its seal function against the surface 15.

From the above it will be apparent that the seal assembly 1 has obvious advantages when used as shielding for a bearing 4 of a wheel assembly (not illustrated) of a vehicle (not illustrated). In such conditions, the seal assembly can be mounted so that the annular cavity 42 is against the outer ring of the bearing 4 so that the annular lip 26 effects the pre-seal described above, as well as the true seal towards the outer diameter of the wheel assembly, at a position close to a road surface (not illustrated), where the greatest concentration of external contaminants is found.

Finally, it is apparent that modifications and variations can be made to the seal assembly 1 within the scope of the invention. In particular, geometrical modifications can be made to the annular lip 26 on the second screen 7 by providing, for example, more than one radial projection 28; or the annular lip 26 itself can be shaped so that the one or more radial projections 28 slidably cooperate with a surface of the first member 2 and not with the sliding surface 15 of the sleeve portion 12 of the rigid reinforcement 10 of the first screen 6.

Alternatively, the rigid reinforcement 38 of the second screen 7 could be extended towards the rolling elements 5, and the lip 18 of the first screen 6 could slide on a surface of the said extended reinforcement instead of on the surface 20 of the second member 3.

Finally, it is possible to alter the method of fixing the screens 6, 7 to the associated members 2, 3 as well as the geometry of their rigid reinforcements 10, 38 and, above all, several grooves 37 can be formed alongside each other in order to improve the axial interaction between the section 30 and the projection 28.

## Claims

1. A seal assembly for a rolling element bearing, the assembly comprising a first and second relatively rotatable members (2,3) of said rolling element bearing closing an annular cavity (8) defined by the said members, a first sealing screen (6) interposed between said members (2,3) and fixed for rotation with the first member (2), and a second sealing screen (7) interposed between said members (2,3) and cooperating with the first screen (6) and fixed for rotation with the second member (3) in a position towards the outside of the said cavity (8) and facing the first screen (6); the said second screen (7) including at least one annular lip (26), substantially cooperating to form a fluid-tight seal with a corresponding sliding surface (15) fitted to the first member (2), and the said annular lip (26) including at least one radial projection (28) for slidable cooperation with the said sliding surface (15);
characterized in that the seal assembly (1) further comprises a shoulder (33) for one of the said members (2,3), and in that, in combination, said annular lip (26) also includes a substantially axial annular end portion (29) shaped so as to project outside the cavity (8) to cooperate axially with said shoulder (33); at least one radial undercut (35) forming a virtual hinge (36), permitting deformations of the said end portion (29) without corresponding deformations of the said annular lip (26) at the said radial projection (28), being formed between the said radial projection (28) and the said end portion (29) of the annular lip (26).

2. A seal assembly according to Claim 1, characterized by the fact that the said first screen (6) includes a rigid reinforcement (10) with a radial flange portion (11) positioned facing the said second screen (7), and a sleeve portion (12) extending axially into a position adjacent the first member (2), the said sliding surface (15) interacting with the radial projection (28) being formed on the said sleeve portion (12) to delimit this towards the second screen (7).

3. A seal assembly according to Claim 2, characterized by the fact that the said first screen (6) comprises an elastomeric element (17), itself including a lip (18) projecting from a rim (19) of the said flange portion (11) opposite the sleeve portion (12), and slidably interacting with a surface (20) fitted to the second member (3), the said elastomeric element (17) also including an annular portion (22) covering the lateral surface (16) of the said sleeve portion (12) opposite the said sliding surface (15) , and fitting between the said sleeve portion (12) and the said first member (2), permitting the interference fit of the first screen (6) on the first member (2).

4. A seal assembly according to Claim 3, characterized by the fact that the said second screen (7) is substantially S-shape in radial half-section and includes a rigid reinforcement (38) which is substantially L-shape in radial half-section, and an elastomeric element (39) including the said annular lip (26) and an additional radial lip (40) opposite the annular lip (26) , the latter being supported by the said rigid reinforcement (38), which is V-shape in radial half-section with its concavity facing outwardly and its axis substantially parallel to the axis (14) of the said members (2,3), and extending towards the said sleeve portion (12).

5. A seal assembly according to any preceding claim, characterized by the fact that the said end portion (29) tapers radially towards the said projection (28) and is delimited on the side facing the said sliding surface (15) by a conical surface (34) tapering towards the said radial projection (28).

6. A seal assembly according to Claim 5, characterized by the fact that the said radial undercut (35) has at least one radial groove formed on the said annular lip (26) on the side opposite from the said conical surface (34).

7. A bearing (4) fitted with the seal assembly (1) according to Claim 4, characterized by the fact that the said first member (2) and second member (3) are rings of the said bearing (4), at least one (3) of the said rings having a circumferential groove (41) adapted to snap engage the said radial lip (40) of the said second screen (7).

## Patentansprüche

1. Dichtungsanordnung für ein Wälzlager, mit einem ersten und zweiten relativ zueinander drehbaren Teil (2, 3) des Wälzlagers, welche einen durch sie begrenzten ringförmigen Hohlraum (8) einschließen, einer ersten Dichtungsabschirmung (6), die zwischen den Teilen (2, 3) angeordnet und drehfest mit dem ersten Teil (2) verbunden ist, sowie einer zweiten Dichtungsabschirmung (7), die zwischen den Teilen (2, 3) angeordnet ist, mit der ersten Abschirmung (6) zusammenwirkt, mit dem zweiten Teil (3) an einer Stelle zur Außenseite des Hohlraums (8) hin drehfest verbunden ist und der ersten Abschirmung (6) gegenüber liegt, wobei die zweite Abschirmung (7) wenigstens eine ringförmige Lippe (26) besitzt, die zur Bildung einer im wesentlichen flüssigkeitsundurchlässigen Dichtung mit einer entsprechenden Gleitfläche (15) zusammenwirkt, welche am ersten Teil (2) angebracht ist, und die ringförmige Lippe (26) wenigstens einen radialen Vorsprung (28) zum gleitenden Zusammenwirken mit der Gleitfläche (15) aufweist, **dadurch gekennzeichnet, daß** die Dichtungsanordnung (1) weiterhin eine Schulter (33) für eines der Teile (2, 3) aufweist und daß in Kombination die ringförmige Lippe (26) auch einen im wesentlichen ringförmigen axialen Endbereich (29) besitzt, der so geformt ist, daß er aus dem Hohlraum (8) herausragt, um mit der Schulter (33) axial zusammenzuwirken, wobei wenigstens eine radiale Hinterschneidung (35) eine Art Gelenk (36) bildet, das Verformungen des Endbereichs (29) ohne entsprechende Verformungen der ringförmigen Lippe (26) an dem radialen Vorsprung (28) gestattet und zwischen dem radialen Vorsprung (28) und dem Endbereich (29) der ringförmigen Lippe (26) ausgebildet ist.

2. Dichtungsanordnung nach Anspruch 1, **dadurch gekennzeichnet, daß** die erste Abschirmung (6) eine steife Verstärkung (10) mit einem radialen Flanschteil (11), das der zweiten Abschirmung (7) gegenüberliegend angeordnet ist, und mit einem Hülsenteil (12) einschließt, der sich nahe dem ersten Teil (2) axial erstreckt, wobei die Gleitfläche (15) mit dem radialen Vorsprung (28) zusammenwirkt und an dem Hülsenteil (12) zu dessen Abgrenzung gegen die zweite Abschirmung (7) ausgebildet ist.

3. Dichtungsanordnung nach Anspruch 2, **dadurch gekennzeichnet, daß** die erste Abschirmung (6) ein elastomeres Element (17) aufweist, das seinerseits eine Lippe (18) einschließt, die von einem dem Hülsenteil (12) gegenüberliegenden Rand (19) des Flanschteils (11) vorsteht und mit einer Fläche (20) an dem zweiten Teil (3) gleitend zusammenwirkt, und das elastomere Element (17) weiterhin einen ringförmigen Bereich (22) einschließt, der die der Gleitfläche (15) gegenüberliegende seitliche Fläche (16) des Hülsenteils (12) abdeckt und zwischen dem Hülsenteil (12) und dem ersten Teil (2) sitzt und damit den Preßsitz der ersten Abschirmung (6) auf dem ersten Teil (2) ermöglicht.

4. Dichtungsanordnung nach Anspruch 3, **dadurch gekennzeichnet, daß** die zweite Abschirmung (7) im radialen Halbschnitt im wesentlichen S-förmig ist und eine steife Verstärkung (38), die im radialen Halbschnitt im wesentlichen L-förmig ist, sowie ein elastomeres Element (39) umfaßt, das die ringförmige Lippe (26) und dieser gegenüber eine zusätzliche radiale Lippe (40) aufweist, wobei die von der steifen Verstärkung (38) gehaltene ringförmige Lippe im radialen Halbschnitt V-förmig ist, ihre konkave Einwölbung nach außen weist, ihre Achse im wesentlichen parallel zur Achse (14) der Teile (2, 3) liegt und sie sich in Richtung zum Hülsenteil (12) erstreckt.

5. Dichtungsanordnung nach einem der vorhergehenden Ansprüche, **dadurch gekennzeichnet, daß** sich der Endbereich (29) in Richtung zum Vorsprung (28) radial verjüngt und an der Seite, die der Gleitfläche (15) zugewandt ist, durch eine konische Fläche begrenzt ist, welche sich in Richtung des radialen Vorsprungs (28) verjüngt.

6. Dichtungsanordnung nach Anspruch 5, **dadurch gekennzeichnet, daß** die radiale Hinterschneidung (35) wenigstens eine radiale Nut hat, die in der ringförmigen Lippe (26) an der gegenüber der konischen Fläche (34) liegenden Seite ausgebildet ist.

7. Lager (4), das mit der Dichtungsanordnung (1) nach Anspruch 4 versehen ist, **dadurch gekennzeichnet, daß** das erste Teil (2) und das zweite Teil (3) Ringe des Lagers (4) sind und wenigstens einer der Ringe (3) eine Umfangsnut (41) besitzt, in welche die radiale Lippe (40) der zweiten Abschirmung (7) einschnappbar ist.

## Revendications

1. Ensemble de joint pour un palier à contact de roulement, l'ensemble comprenant des premier et second organes de palier (2, 3) pouvant tourner l'un par rapport à l'autre qui ferment une cavité annulaire (8) définie par lesdits organes, un premier écran d'étanchéité (6) intercalé entre lesdits organes (2, 3) et fixé pour tourner avec le premier organe (2) et un second écran d'étanchéité (7) intercalé entre lesdits organes (2, 3), coopérant avec le premier écran (6) et fixé pour tourner avec ledit second organe (3) en une position située à l'extérieur de ladite cavité (8) et faisant face audit premier écran (6), ledit second écran (7) comprenant au moins une lèvre annulaire (26) qui coopère essentiellement pour former un joint étanche aux fluides avec une surface de glissement correspondante (15) fixée audit premier organe (2) et ladite lèvre annulaire (26) comportant au moins une saillie radiale (28) pour coopérer par glissement avec ladite surface de glissement (15),
caractérisé en ce que l'ensemble de joint (1) comprend en outre un épaulement (33) pour l'un desdits organes (2, 3) et en ce que, en coopération, ladite lèvre annulaire (26) comprend également une partie annulaire d'extrémité (29) sensiblement axiale dont la forme lui permet de dépasser à l'extérieur de la cavité (8) pour coopérer axialement avec ledit épaulement (33), au moins une contre-dépouille radiale (35), qui forme une charnière virtuelle (36) permettant des déformations de ladite partie d'extrémité (29) sans déformation correspondante de ladite lèvre annulaire (26) au niveau de ladite saillie radiale (28), étant formée entre ladite saillie radiale (28) et ladite partie d'extrémité (29) de la lèvre annulaire (26).

2. Ensemble de joint selon la revendication 1, caractérisé par le fait que ledit premier écran (6) comprend un renfort rigide (10) avec une partie formant collerette radiale (11) placée en face dudit second écran (7) et une partie formant manchon (12) qui s'étend axialement jusqu'à une position adjacente au premier organe (2), ladite surface de glissement (15) qui interagit avec la saillie radiale (28) étant formée sur ladite partie formant manchon (12) pour délimiter celle-ci en direction dudit second écran (7).

3. Ensemble de joint selon la revendication 2, caractérisé par le fait que ledit premier écran (6) comprend un élément élastomère (17) qui comporte lui-même une lèvre (18) faisant saillie d'un bord (19) de ladite partie formant collerette (11) à l'opposé de ladite partie formant manchon (12) et interagissant de façon glissante avec une surface (20) fixée audit second organe (3), ledit élément élastomère (17) comportant aussi une partie annulaire (22) qui recouvre la surface latérale (16) de ladite partie formant manchon (12) opposée à ladite surface de glissement (15) et s'emboîtant entre ladite partie formant manchon (12) et ledit premier organe (2) en permettant un ajustement serré du premier écran (6) sur le premier organe (2).

4. Ensemble de joint selon la revendication 3, caractérisé par le fait que ledit second écran (7) a, en demi-coupe radiale, sensiblement la forme d'un S et comprend un renfort rigide (38) qui a en demi-coupe radiale sensiblement la forme d'un L et un élément élastomère (39) comprenant ladite lèvre annulaire (26) ainsi qu'une lèvre radiale supplémentaire (40) opposée à la lèvre annulaire (26), cette dernière étant supportée par ledit renfort rigide (38), qui a en demi-coupe radiale la forme d'un V dont la concavité est tournée vers l'extérieur et dont l'axe est sensiblement parallèle à l'axe (14) desdits organes (2, 3) et qui s'étend vers ladite partie formant manchon (12).

5. Ensemble de joint selon l'une quelconque des précédentes revendications, caractérisé par le fait que ladite partie d'extrémité (29) s'effile radialement en direction de ladite saillie (28) et est délimitée sur le côté faisant face à ladite surface de glissement (15) par une surface conique (34) qui converge vers ladite saillie radiale (28).

6. Ensemble de joint selon la revendication 5, caractérisé par le fait que ladite contre-dépouille radiale (35) comporte au moins une rainure radiale formée sur ladite lèvre annulaire (26) sur le côté à l'opposé de ladite surface conique (34).

7. Palier (4) comportant un ensemble de joint (1) selon la revendication 4, caractérisé par le fait que ledit premier organe (2) et ledit second organe (3) sont des bagues dudit palier (4), l'une au moins (3) desdites bagues ayant une rainure circonférentielle (41) dans laquelle ladite lèvre radiale (40) du second écran (7) peut s'encliqueter.
